# EUROPÄISCHE PATENTSCHRIFT

(11) **EP 3 462 061 B1**
(45) Veröffentlichungstag und Bekanntmachung des Hinweises auf die Patenterteilung: **12.08.2020**
(21) Anmeldenummer: 18197077.3
(22) Anmeldetag: 27.09.2018
(51) Int. Cl.: F16J 15/34, F16J 15/36

(54) **GLEITRINGDICHTUNGSANORDNUNG INSBESONDERE FÜR ANTRIEBE**
SLIDE RING SEAL ARRANGEMENT IN PARTICULAR FOR DRIVE SHAFTS
SYSTEME DE GARNITURE MÉCANIQUE D'ÉTANCHÉITÉ, EN PARTICULIER POUR ENTRAÎNEMENTS

(30) Priorität: 02.10.2017 DE 102017217534
(43) Veröffentlichungstag der Anmeldung: 03.04.2019
(73) Patentinhaber: EagleBurgmann Germany GmbH & Co. KG, 82515 Wolfratshausen (DE)
(72) Erfinder: SIMON, Clemens, 82362 Weilheim (DE); LANG, Dr. Klaus, 82547 Eurasburg (DE)
(74) Vertreter: Hoefer & Partner Patentanwälte mbB

(56) Entgegenhaltungen:
- WO-A1-02/064951
- WO-A1-2013/106194
- DE-A1- 3 703 533
- US-A- 5 626 347

## Beschreibung

Die vorliegende Erfindung betrifft eine Gleitringdichtungsanordnung insbesondere für Antriebe, beispielsweise bei Fahrzeugen.

Gleitringdichtungsanordnungen sind aus dem Stand der Technik in unterschiedlichen Ausgestaltungen bekannt. Bei Elektrofahrzeugen wird beispielsweise zur Erhöhung eines Wirkungsgrades ein Getriebe verwendet. Hierbei muss eine Abdichtung zwischen dem elektrischen Antrieb und dem Getriebe vorgenommen werden, was beispielsweise mittels einer Gleitringdichtungsanordnung möglich ist. Hierbei muss eine Abdichtung zwischen der im elektrischen Antrieb vorhandenen Luft und dem mit Schmiermittel betriebenen Getriebe bzw. ölhaltigen Dämpfen erfolgen. Auch bei konventionell mit Brennkraftmaschinen betriebenen Fahrzeugen sind derartige Abdichtungsaufgaben zu lösen. Da die Anwendung dieser Gleitringdichtungsanordnung für einen Massenmarkt konzipiert ist, sollte ein möglichst einfacher und kostengünstiger Aufbau möglich sein. Aus der WO 2013/106194 A1 ist ferner eine Gleitringdichtungsanordnung mit den Merkmalen des Oberbegriffs des Anspruchs 1 bekannt.

Es ist daher Aufgabe der vorliegenden Erfindung, eine Gleitringdichtungsanordnung bereitzustellen, welche bei einfachem Aufbau und einfacher, kostengünstiger Herstellbarkeit auch für einen robusten Betrieb in einem Fahrzeug ausgelegt ist.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass sie sehr einfach aufgebaut ist und besonders gut geeignet ist für einen Trockenlauf. Die Gleitringrichtungsanordnung erlaubt eine elastomerfreie Bauweise und durch die Verwendung geeigneter Materialien einen großen Temperatureinsatzbereich, z.B. von -200°C bis 550°C bei metallischer Ausführung. Somit ist die erfindungsgemäße Gleitringdichtungsanordnung sehr robust und insbesondere geeignet, in einem Fahrzeug zwischen einem Antrieb und einem Getriebe abzudichten. Bei einer Abdichtung am z.B. elektrischen Antrieb können Temperaturen über 200°C auftreten, so dass eine Abdichtung mittels eines Elastomerbalgs nicht mehr möglich ist. Dies wird erfindungsgemäß dadurch erreicht, dass die Gleitringdichtungsanordnung eine Gleitringdichtung mit einem rotierenden und einem stationären Gleitring aufweist, welche zwischen sich einen Dichtspalt begrenzen. Dabei weist der rotierende Gleitring einen Fußbereich, eingerichtet für eine Verbindung mit einem rotierenden Bauteil wie z. B. einer Welle, einen Gleitbereich mit einer Gleitfläche und eine Entkoppeleinrichtung auf. Die Entkoppeleinrichtung ist in radialer Richtung zwischen dem Fußbereich und dem Gleitbereich angeordnet. Die Entkoppeleinrichtung entkoppelt dabei den Fußbereich vom Gleitbereich, was wichtig ist, da bei der Montage des rotierenden Gleitrings auf dem rotierenden Bauteil häufig Verformungen entstehen können, welche dazu führen können, dass die Gleitfläche des Gleitbereichs unerwünschte Unebenheiten aufweist bzw. eine Schiefstellung, d.h., Abweichung von einem Winkel von 90° zur Rotationsachse des Gleitbereichs auftreten kann. Hierdurch würde sich im Betrieb bei einer Schiefstellung der Dichtspalt im Schnitt eine A-Form oder V-Form aufweisen, wodurch eine Leckage über den Dichtspalt signifikant erhöht wird. Durch die Erfindung kann jedoch mittels der Entkoppeleinrichtung vermieden werden, dass derartige Schiefstellungen der Gleitfläche auftreten, sodass eine lange Lebensdauer der Gleitringdichtungsanordnung bei minimaler Leckage gewährleistet ist. Die Gleitringdichtungsanordnung ist vorzugsweise eine gasgeschmierte Gleitringdichtungsanordnung, wobei in wenigstens einer Gleitfläche Gasnuten vorgesehen sein können. Die Gleitringdichtungsanordnung erlaubt einen berührungsfreien, reibungsarmen Betrieb in einem weiten Bereich der Gleitgeschwindigkeit von 0.1 bis 300 m/s,und insbesondere hohe Gleitgeschwindigkeiten von ≥ 25 m/s.

Ferner umfasst die Gleitringdichtungsanordnung ein Faltenbalg-Element, welches am stationären Gleitring angeordnet ist und eine Abdichtung zu einem stationären Bauteil, vorzugsweise einem Gehäusebauteil, ermöglicht. Das Faltenbalg-Element ist vorzugsweise am Axialbereich des stationären Gleitrings angeordnet. Das Faltenbalg-Element ermöglicht dabei sowohl Radialbewegungen des stationären Gleitrings als auch Axialbewegungen des stationären Gleitrings. Dies wird durch flexible Balgbereiche des Faltenbalg-Elements sichergestellt. Die Balgbereiche sind bevorzugt in Radialrichtung des stationären Gleitrings ausgerichtet. Das Faltenbalgelement übt nur eine geringe Vorspannung auf die Gleitringdichtung aus. Hierdurch wird es möglich, dass ein Abheben der Gleitflächen der Gleitringe schon nach Erreichen einer Gleitgeschwindigkeit von 0,1 m/s auftritt. Dies reduziert einen Verschleiß beim Anfahren einer abzudichtenden Maschine oder dgl. erheblich.

Dabei weist das Faltenbalg-Element einen Aufbau aus einem ersten Teilbalg und einem zweiten Teilbalg auf. Der erste und zweite Teilbalg sind dabei vorzugsweise gleich aufgebaut. Jeder Teilbalg umfasst neben einem Balgbereich einen inneren Randbereich und einen äußeren Randbereich. Dadurch kann ein Faltenbalg-Element bereitgestellt werden, welches aus zwei Teilbälgen zusammengesetzt ist, wobei die beiden Teilbälge vorzugsweise jeweils an den inneren Randbereichen und den äußeren Randbereichen miteinander verbunden sind. Die Verbindung zwischen den beiden Teilbälgen ist vorzugsweise jeweils eine Kraftschlussverbindung am inneren und äußeren Randbereich. Weiter bevorzugt ist ferner eine weitere Kraftschlussverbindung zwischen dem Faltenbalg-Element und dem stationären Gleitring vorgesehen und vorzugsweise auch eine weitere Kraftschlussverbindung zwischen dem Faltenbalg-Element und dem stationären Bauteil.

Durch das Vorsehen des Faltenbalg-Elements ist ein weiterer großer Vorteil der Gleitringdichtungsanordnung, dass auch an dem stationären Gleitring keine zusätzliche Nebendichtung, wie ein O-Ring oder dergleichen, notwendig ist. Hierdurch kann die erfindungsgemäße Gleitringdichtungsanordnung weiter vereinfacht werden.

Vorzugsweise ist der rotierende Gleitring ein einteiliges Bauteil aus einem Material und umfasst den Fußbereich, die Entkopplungseinrichtung und den Gleitbereich. Dadurch kann ein robuster und sehr kostengünstig herstellbarer rotierender Gleitring bereitgestellt werden.

Besonders bevorzugt umfasst die Entkopplungseinrichtung des rotierenden Gleitrings eine Verengung zwischen dem Fußbereich und dem Gleitbereich. Die Verengung verhindert, dass Verwerfungen, die bei der Montage des rotierenden Gleitrings auf das rotierende Bauteil auftreten können, auf die Gleitfläche am Gleitbereich übertragen werden.

Besonders bevorzugt ist die als Verengung ausgebildete Entkopplungseinrichtung in Axialrichtung des rotierenden Gleitrings mittig am rotierenden Gleitring angeordnet. Besonders bevorzugt wird die Verengung dabei durch zwei symmetrische Ausnehmungen am rotierenden Gleitring gebildet. Die Ausnehmungen weisen besonders bevorzugt einen Querschnitt ohne Eckbereiche auf und sind besonders bevorzugt als halbe Ovale vorgesehen.

Alternativ ist die Verengung asymmetrisch ausgebildet, insbesondere durch zwei asymmetrische Ausnehmungen, die asymmetrisch zu einer Mittellinie des rotierenden Gleitrings sind.

Besonders bevorzugt weist der Gleitbereich eine Breite B auf und die Verengung weist eine Breite B1 auf, welche in einem Bereich von 10 bis 80 % der Breite B des Gleitbereichs liegt. Die Breiten B, B1 werden dabei in Axialrichtung des rotierenden Gleitrings gemessen. Die Breite B1 liegt vorzugsweise in einem Bereich von 10 bis 50%, bevorzugt 20 bis 30 % der Breite B des Gleitrings.

Gemäß einer alternativen Ausgestaltung der Erfindung ist die Entkoppeleinrichtung ein elastischer Bereich, welcher zwischen dem Fußbereich und dem Gleitbereich angeordnet ist. Der elastische Bereich ist beispielsweise ein Elastomer oder ein gummiartiger Bereich. Eine Verbindung zum Fußbereich und zum Gleitbereich des rotierenden Gleitrings kann beispielsweise mittels Kleben oder einem anderen Fügeverfahren hergestellt werden. Der rotierende Gleitring ist somit aus drei einzelnen Bauteilen zusammengefügt. Weiter bevorzugt weist der elastische Bereich eine Verengung auf. Vorzugsweise ist der elastische Bereich ein O-Ring, welcher fest, z.B. mittels einer Klebeverbindung, mit dem Fußbereich und dem Gleitbereich verbunden ist. Es sei angemerkt, dass der rotierende Gleitring auch mit einem elastischen Bereich als vormontiertes Bauteil in eine Gleitringdichtungsanordnung eingebaut werden kann.

Besonders bevorzugt weist der Fußbereich des rotierenden Gleitrings eine Fixierfläche auf, die eingerichtet ist, den rotierenden Gleitring an einem rotierenden Bauteil, vorzugsweise einer Welle oder einer Wellenhülse, zu fixieren. Die Fixierfläche ist als abdichtende Kraftschlussfläche eingerichtet, sodass im montierten Zustand des rotierenden Gleitrings eine abdichtende Kraftschlussverbindung zwischen dem rotierenden Gleitring, genauer dem Fußbereich des rotierenden Gleitrings und dem rotierenden Bauteil ausgebildet ist. Dadurch kann eine schnelle und sichere Fixierung des rotierenden Gleitrings auf dem rotierenden Bauteil ermöglicht werden. Die bisher im Stand der Technik vorhandene Gefahr, dass insbesondere durch das Vorsehen der Kraftschlussverbindung zwischen dem rotierenden Gleitring und dem rotierenden Bauteil Verwerfungen oder Schiefstellungen oder dergleichen auf die Gleitfläche übertragen werden, kann erfindungsgemäß durch die Entkoppeleinrichtung vermieden werden. Die Entkoppeleinrichtung entkoppelt dabei den Fußbereich vom Gleitbereich des rotierenden Gleitrings, sodass keine Verwerfung oder Verformung oder dergleichen auf die Gleitfläche übertragen wird. Somit weist die Gleitfläche des rotierenden Gleitrings eine Ebenheit auf, welche besonders bevorzugt ≤ 1 µm ist.

Ein weiterer großer Vorteil der Kraftschlussverbindung zwischen dem Fußbereich des rotierenden Gleitrings und dem rotierenden Bauteil liegt darin, dass keine Nebendichtung zwischen dem rotierenden Bauteil und dem rotierenden Gleitring notwendig ist. Eine Abdichtung zwischen rotierendem Bauteil und dem rotierenden Gleitring erfolgt an der kraftschlüssigen Verbindung zwischen diesen beiden Bauteilen. Dadurch muss kein Nebendichtelement am rotierenden Gleitring montiert werden und eine kostengünstigere Ausgestaltung der Gleitringdichtungsanordnung ist möglich.

Gemäß einer weiteren bevorzugten Ausgestaltung der Erfindung ist der rotierende Gleitring zwischen einem ersten Bauteil und einem zweiten Bauteil in Axialrichtung eingespannt. Der rotierende Gleitring kann beispielsweise zwischen einem Wellenabsatz und einer Hülse in Axialrichtung eingespannt werden oder alternativ zwischen zwei Hülsen eingespannt werden. Durch den Entkoppelungsbereich zwischen dem Fußbereich und dem Gleitbereich wird dabei vermieden, dass durch die Einspannung zwischen dem ersten und zweiten Bauteil am Fußbereich Verspannungen oder Verwerfungen oder dgl. auf die Gleitfläche übertragen werden.

Weiter bevorzugt weist der stationäre Gleitring der Gleitringdichtung einen Querschnitt mit einem Radialbereich und einem Axialbereich auf. Hierbei weist der Radialbereich eine Gleitfläche des stationären Gleitrings auf und der Axialbereich dient zur Befestigung des stationären Gleitrings. Der Axialbereich ist vorzugsweise an einem radial inneren Bereich des stationären Gleitrings oder einem radial äußeren Bereich des stationären Gleitrings oder einem mittleren Bereich des stationären Gleitrings angeordnet. Bei einer Anordnung an einem radial inneren des stationären Gleitrings ergibt sich ein L-förmiger Querschnitt des stationären Gleitrings. Bei einer Anordnung an einem radial äußeren Bereich des stationären Gleitrings ergibt sich ein Γ-förmiger (Gamma-förmiger) Querschnitt des stationären Gleitbereichs. Bei einer Anordnung in einem mittleren Bereich des stationären Gleitrings, insbesondere exakt mittig am stationären Gleitring, ergibt sich ein seitlich liegender, T-förmiger Querschnitt. Dieser T-förmige Querschnitt ist besonders bevorzugt, da hierdurch eine Krafteinleitung auf den stationären Gleitring an einem mittleren Bereich des stationären Gleitrings erfolgen kann.

Der stationäre Gleitring ist besonders bevorzugt ein Tiefziehteil. Dabei sind der Radialbereich und der Axialbereich einstückig ausgebildet. Hierdurch kann der stationäre Gleitring besonders einfach und kostengünstig hergestellt werden.

Die erfindungsgemäße Gleitringdichtungsanordnung ist weiter bevorzugt eine gasgeschmierte Gleitringdichtungsanordnung. Vorzugsweise sind hierbei in der Gleitfläche des rotierenden Gleitrings und/oder der Gleitfläche des stationären Gleitrings zusätzlich Gasnuten eingebracht. Hierdurch wird sichergestellt, dass bei einem Anlaufen, d. h. Starten der Drehbewegung, schnell ein Druckpolster zwischen dem rotierenden und dem stationären Gleitring im Dichtspalt aufgebaut wird, um ein Abheben der Gleitringe voneinander zu beschleunigen.

Weiterhin betrifft die vorliegende Erfindung einen Antrieb, insbesondere elektrischen Antrieb, mit einem Getriebe, wobei eine erfindungsgemäße Gleitringdichtungsanordnung den Antrieb vom Getriebe abdichtet.

Nachfolgend werden unter Bezugnahme auf die begleitende Zeichnung Ausführungsbeispiele der Erfindung im Detail beschrieben. In der Zeichnung ist:
- Figur 1: eine schematische Schnittansicht einer Gleitringdichtungsanordnung gemäß einem ersten bevorzugten Ausführungsbeispiel der Erfindung,
- Figur 2: eine schematische Schnittansicht eines rotierenden Gleitrings einer Gleitringdichtungsanordnung gemäß einem zweiten bevorzugten Ausführungsbeispiel der Erfindung,
- Figur 3: eine schematische Schnittansicht eines rotierenden Gleitrings einer Gleitringdichtungsanordnung gemäß einem dritten bevorzugten Ausführungsbeispiel der Erfindung,
- Figur 4: eine schematische Schnittansicht eines rotierenden Gleitrings einer Gleitringdichtungsanordnung gemäß einem vierten bevorzugten Ausführungsbeispiel der Erfindung,
- Figur 5: schematische Schnittansicht einer Gleitringdichtungsanordnung gemäß einem fünften Ausführungsbeispiel der Erfindung, und
- Figur 6: schematische Schnittansicht einer Gleitringdichtungsanordnung gemäß einem sechsten Ausführungsbeispiel der Erfindung.

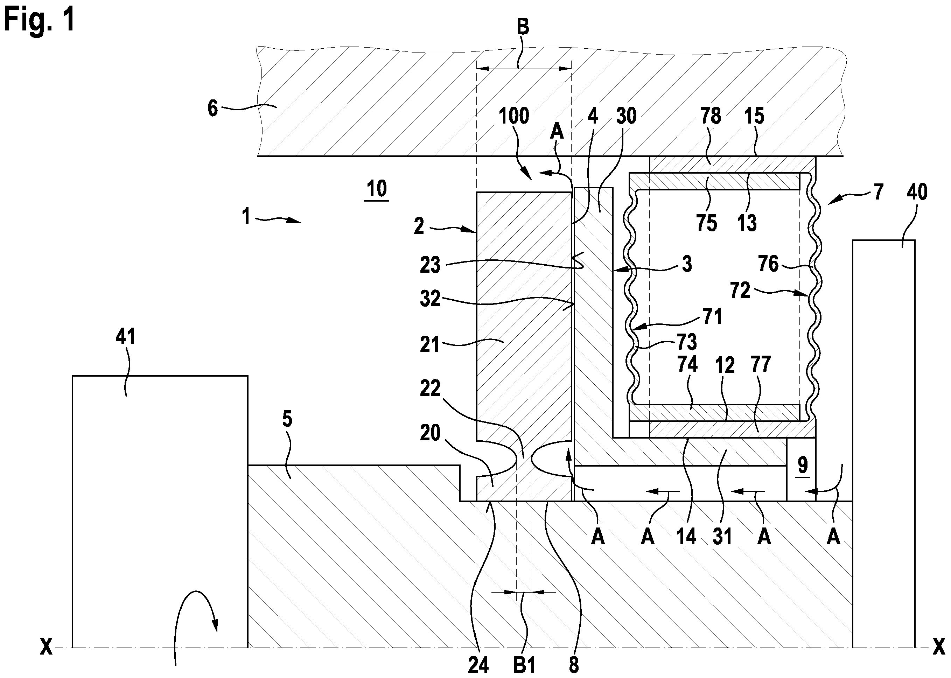

Figur 1 zeigt schematisch eine Schnittansicht einer Gleitringdichtungsanordnung 1 gemäß einem bevorzugten Ausführungsbeispiel der Erfindung.

Wie aus Figur 1 ersichtlich ist, umfasst die Gleitringdichtungsanordnung 1 eine Gleitringdichtung 100 mit einem rotierenden Gleitring 2 und einem stationären Gleitring 3, welche zwischen sich einen Dichtspalt 4 definieren.

Der rotierende Gleitring 2 weist eine erste Gleitfläche 23 auf und der stationäre Gleitring 3 weist eine zweite Gleitfläche 32 auf.

Die Gleitringdichtungsanordnung 100 dichtet dabei eine Motorseite 9, an welchem ein Antrieb 40 angeordnet ist, von einer Getriebeseite 10 ab, an welcher ein Getriebe 41 angeordnet ist. Der Antrieb 40 ist vorzugsweise ein Antrieb eines Fahrzeugs, wobei eine Abdichtung des Antriebs zum Getriebe 41 vorgesehen ist.

Die Gleitringdichtungsanordnung 1 dichtet an einem rotierenden Bauteil 5, welches in diesem Ausführungsbeispiel eine Welle ist, ab. Das rotierende Bauteil 5 verbindet den Antrieb 40 mit dem Getriebe 41.

Wie im Detail aus Figur 1 ersichtlich ist, weist der rotierende Gleitring 2 einen Fußbereich 20, einen Gleitbereich 21 und eine Entkoppeleinrichtung 22 auf. Die Entkoppeleinrichtung 22 ist in diesem Ausführungsbeispiel eine Verengung. Die Verengung ist dabei in Radialrichtung des rotierenden Gleitrings zwischen dem Fußbereich 20 und dem Gleitbereich 21 angeordnet.

Die Entkoppeleinrichtung 22 weist dabei eine Breite B1 in Axialrichtung X-X auf, welche ca. 20 % einer Breite B des Gleitbereichs 21 des rotierenden Gleitrings beträgt.

Der rotierende Gleitring 2 ist ein einstückiges Bauteil, insbesondere aus Metallmaterial, wobei die Entkoppeleinrichtung 22 beispielsweise durch einen Fräsvorgang oder dergleichen erzeugt werden kann.

Der rotierende Gleitring 2 ist am Fußbereich 20 mittels einer ersten Kraftschlussverbindung 8 am rotierenden Bauteil 5 fixiert. Durch die Verwendung der Kraftschlussverbindung 8 zwischen rotierendem Gleitring 2 und rotierendem Bauteil 5 kann auf das Vorsehen einer Nebendichtung am rotierenden Gleitring 2 verzichtet werden. Hierdurch können neben den Kosten für die Nebendichtung, wie z. B. ein O-Ring oder dergleichen, zusätzlich auch noch die Kosten für die Herstellung einer Nut, in welcher die Nebendichtung angeordnet ist, eingespart werden. Hierbei ist am Fußbereich 20 eine Fixierfläche 24 ausgebildet, welche für die Kraftschlussverbindung eingerichtet ist und in diesem Ausführungsbeispiel eine Innenzylinderfläche ist.

Weiterhin umfasst die Gleitringdichtung 100 den stationären Gleitring 3, welcher, wie aus Figur 1 ersichtlich ist, im Querschnitt eine L-Form aufweist. Dabei weist der stationäre Gleitring einen Radialbereich 30 und einen Axialbereich 31 auf. Der stationäre Gleitring 3 ist dabei ein einstückiges Bauteil und vorzugsweise ein Tiefziehbauteil.

Somit weist der stationäre Gleitring 3 als Axialbereich 31 einen in Axialrichtung X-X gerichteten, ringförmigen Kragen auf, an welchem ein vorzugsweise metallisches Faltenbalg-Element 7 angeordnet ist.

Das Faltenbalg-Element 7 ist im Detail ebenfalls in Figur 1 dargestellt und umfasst einen ersten Teilbalg 71 und einen zweiten Teilbalg 72. Die beiden Teilbalge 71, 72 sind miteinander verbunden und stellen eine Verbindung des stationären Gleitrings 3 mit einem Gehäuse 6 bereit.

Wie im Detail aus Figur 1 ersichtlich ist, weist der erste Teilbalg 71 einen ersten Balgbereich 73, einen ersten inneren Randbereich 74 und einen ersten äußeren Randbereich 75 auf. Der zweite Teilbalg 72 weist einen zweiten Balgbereich 76, einen zweiten inneren Randbereich 77 und einen zweiten äußeren Randbereich 78 auf.

Der erste Teilbalg 71 und der zweite Teilbalg 72 sind dabei in gleicher Weise als ringförmige Elemente aufgebaut, deren radiale Ränder durch die Randbereiche begrenzt sind und deren Boden durch die Balgbereiche 73, 76 gebildet wird. Die inneren Randbereiche sind radial innerhalb der äußeren Randbereiche angeordnet.

Wie weiter aus Figur 1 ersichtlich ist, ist im montierten Zustand des Faltenbalg-Elements 7 der erste Teilbalg 71 in den zweiten Teilbalg 72 eingebracht. Hierbei ergibt sich zwischen dem ersten inneren Randbereich 74 und dem zweiten inneren Randbereich 77 ein erster Verbindungsbereich 12. Zwischen dem ersten äußeren Randbereich 75 und dem zweiten äußeren Randbereich 78 ergibt sich ein zweiter Verbindungsbereich 13. Sowohl der erste als auch der zweite Verbindungsbereich 13 sind vorzugsweise als abdichtende Kraftschlussverbindung ausgebildet.

Im montierten Zustand des Faltenbalg-Elements 7 in der Gleitringdichtungsanordnung 1 ergibt sich ferner zwischen dem zweiten inneren Randbereich 77 und dem stationären Gleitring 3 am Axialbereich 31 ein dritter Verbindungsbereich 14 und zwischen dem zweiten äußeren Randbereich 78 und dem Gehäuse 6 ein vierter Verbindungsbereich 15. Hierbei sind der dritte und vierte Verbindungsbereich 14, 15 ebenfalls als Kraftschlussverbindung ausgebildet.

Somit muss ebenfalls kein Nebendichtelement am stationären Gleitring 3 vorgesehen sein, sodass die gesamte Gleitringdichtungsanordnung nebendichtungsfrei bereitgestellt werden kann.

Weiterhin sind alle beschriebenen Kraftschlussverbindungen auch abdichtend.

Somit kann eine besonders einfach aufgebaute Gleitringdichtungsanordnung 1 bereitgestellt werden, bei der eine schnelle und einfache Montage durch kraftschlüssige, abdichtende Pressverbindungen möglich ist. Dabei muss kein einziges Nebendichtungselement, wie z. B. O-Ringe oder dergleichen, verwendet werden. Weiterhin kann die erfindungsgemäße Gleitringdichtungsanordnung sehr robust aufgebaut sein. Darüber hinaus ist eine Herstellung der Bauteile der Gleitringdichtungsanordnung besonders einfach und kostengünstig. Beispielsweise kann der stationäre Gleitring 3 durch Tiefziehen hergestellt werden und der rotierende Gleitring 2 durch ein spanabhebendes Verfahren, beispielsweise Fräsen oder dergleichen, hergestellt werden.

Durch das Anordnen des stationären Gleitrings 3 mittels des Faltenbalg-Elements 7 am Gehäuse 6 wird ferner eine Beweglichkeit des stationären Gleitrings 3 sowohl in Radialrichtung als auch in Axialrichtung X-X ermöglicht, da die Balgbereiche 73, 76 die Flexibilität in beide Richtungen herstellen.

Im Betrieb dichtet nun die Gleitringdichtungsanordnung 1 zwischen dem z.B. elektrischen Antrieb 40 und dem Getriebe 41 ab. Dabei ist ein Gasstrom, wie in Figur 1 durch die Pfeile A angedeutet, ausgehend von der Motorseite 9 über den Dichtspalt 4 zur Getriebeseite 10 ausgebildet. Dadurch wird verhindert, dass ölhaltiges Medium von der Getriebeseite 10 zur Motorseite 9 gelangt und dabei Schäden am Antrieb 40 hervorrufen kann.

Das Faltenbalg-Element 7 kann ferner aus zwei gleich aufgebauten Bauteilen, nämlich dem ersten und zweiten Teilbalg 71, 72 hergestellt werden, wodurch die Herstellungskosten weiter gesenkt werden können.

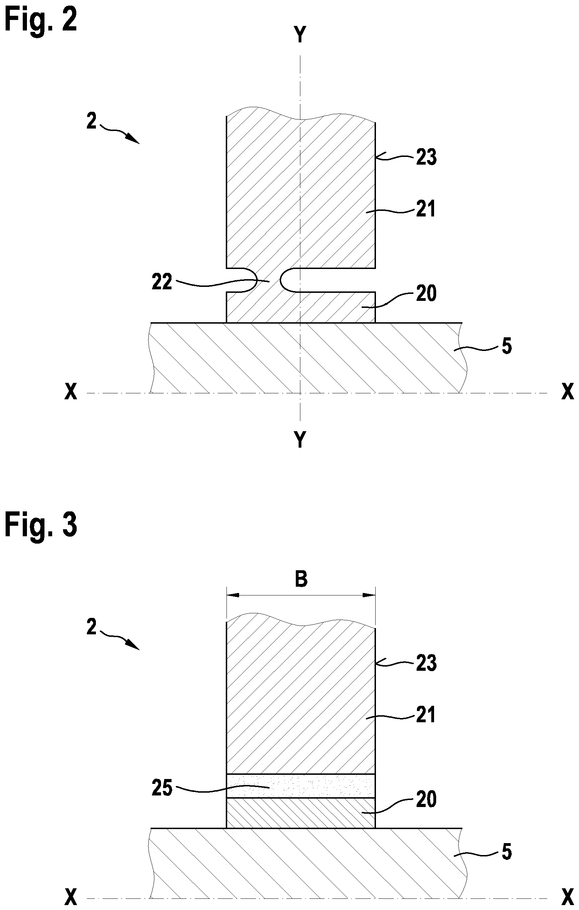

Die Fig. 2 bis 4 zeigen drei alternative Ausgestaltungen eines rotierenden Gleitrings 2, welcher beispielsweise in einer Gleitringdichtungsanordnung 1 gemäß Fig. 1 verwendbar ist.

Fig. 2 zeigt einen rotierenden Gleitring 2 eines zweiten Ausführungsbeispiels, bei dem eine Verengung 22 asymmetrisch zu einer Mittellinie Y-Y des rotierenden Gleitrings vorgesehen ist. Die Verengung 22 wird durch zwei unterschiedlich große ovalförmige Ausnehmungen gebildet.

Figur 3 zeigt einen rotierenden Gleitring 2 gemäß einem dritten Ausführungsbeispiel der Erfindung. Die Entkoppelungseinrichtung des dritten Ausführungsbeispiels ist ein elastischer Bereich 25, welcher zwischen dem Fußbereich 20 und dem Gleitbereich 21 des rotierenden Gleitrings 2 angeordnet ist. Der elastische Bereich 25 ist beispielsweise ein Elastomer oder ein gummiartiges Material. Der elastische Bereich 25 kann dabei über die gesamte Breite B des rotierenden Gleitrings 2 vorgesehen sein oder auch entsprechend dem vorhergehenden Ausführungsbeispiel als Verengung vorgesehen sein.

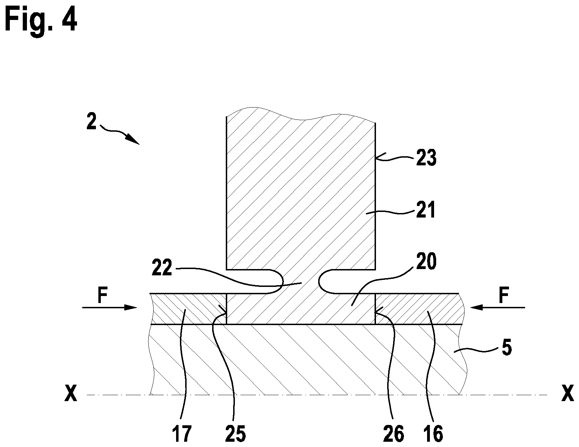

Figur 4 zeigt einen rotierenden Gleitring 2 gemäß einem vierten Ausführungsbeispiel der Erfindung. Der rotierende Gleitring 2 des vierten Ausführungsbeispiels entspricht im Wesentlichen dem des ersten Ausführungsbeispiels, wobei im Unterschied zum ersten Ausführungsbeispiel beim vierten Ausführungsbeispiel der rotierende Gleitring 2 zwischen einem ersten Bauteil 16 und einem zweiten Bauteil 17 eingespannt ist. Hierbei wirken Vorspannkräfte F auf den Fußbereich 20. Dadurch weist der rotierende Gleitring 2 zwei axiale Fixierflächen 25, 26 auf, an welchen der rotierende Gleitring 2 eingespannt ist. Es sei angemerkt, dass das erste und zweite Bauteil 16, 17 beispielsweise Wellenhülsen sein können, oder eines der Bauteile kann ein Absatz an einer Welle 5 sein.

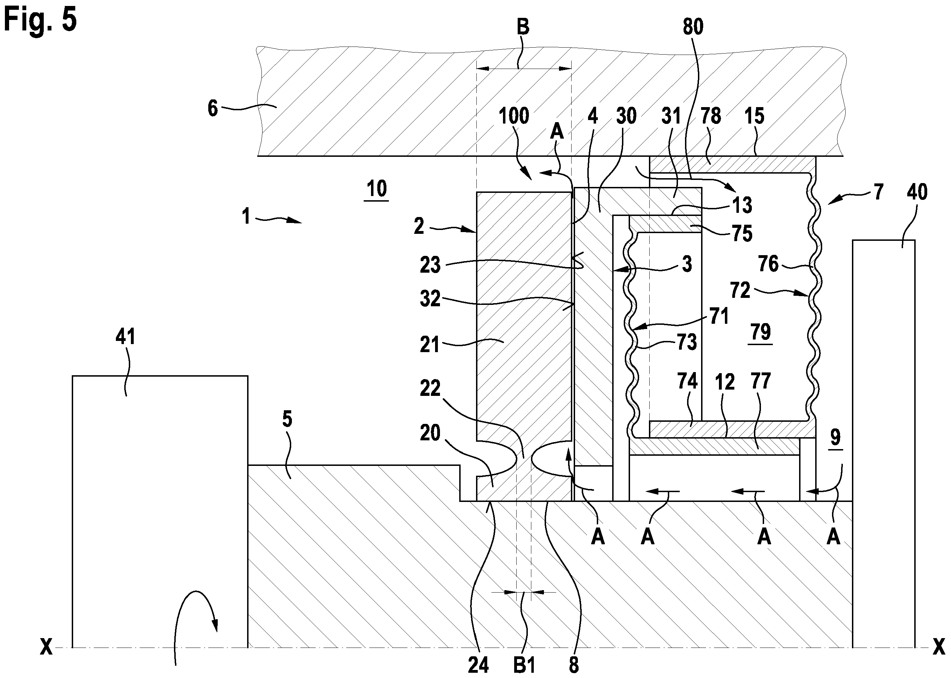

Figur 5 zeigt eine Gleitringdichtungsanordnung 1 gemäß einem fünften Ausführungsbeispiel der Erfindung. Das fünfte Ausführungsbeispiel entspricht im Wesentlichen dem ersten Ausführungsbeispiel, wobei im Unterschied zum ersten Ausführungsbeispiel das Faltenbalgelement 7 unterschiedlich ausgebildet ist. Wie aus Fig. 5 ersichtlich ist, weist der stationäre Gleitring 3 einen Querschnitt in Γ-Form (Gamma-Form) auf. Hierbei ist der Axialbereich 31 an einem radial äußersten Bereich des Radialbereichs 30 des stationären Gleitrings 3 angeordnet. Das Faltenbalgelement 7 umfasst einen ersten Teilbalg 71 und einen zweiten Teilbalg 72. Der erste Teilbalg 71 ist an einem ersten äußeren Randbereich 75 über einen zweiten Verbindungsbereich 13 mit dem Axialbereich 31 des stationären Gleitrings 3 verbunden. An einem ersten Verbindungsbereich 12 ist der erste Teilbalg 71 mit dem zweiten Teilbalg 72 verbunden. Der zweite Teilbalg 72 ist wie beim ersten Ausführungsbeispiel mit dem Gehäuse 6 verbunden. Wie aus Fig. 5 ersichtlich ist, ergibt sich dadurch ein offenes Faltenbalgelement 7, wobei das abzudichtende Medium in einem Innenbereich 79 zwischen dem ersten und zweiten Teilbalg 71, 72 vorhanden ist. Dies ist in Fig. 5 durch den Pfeil 80 angedeutet. Im Innenraum 79 herrscht somit der Druck des abzudichtenden Mediums.

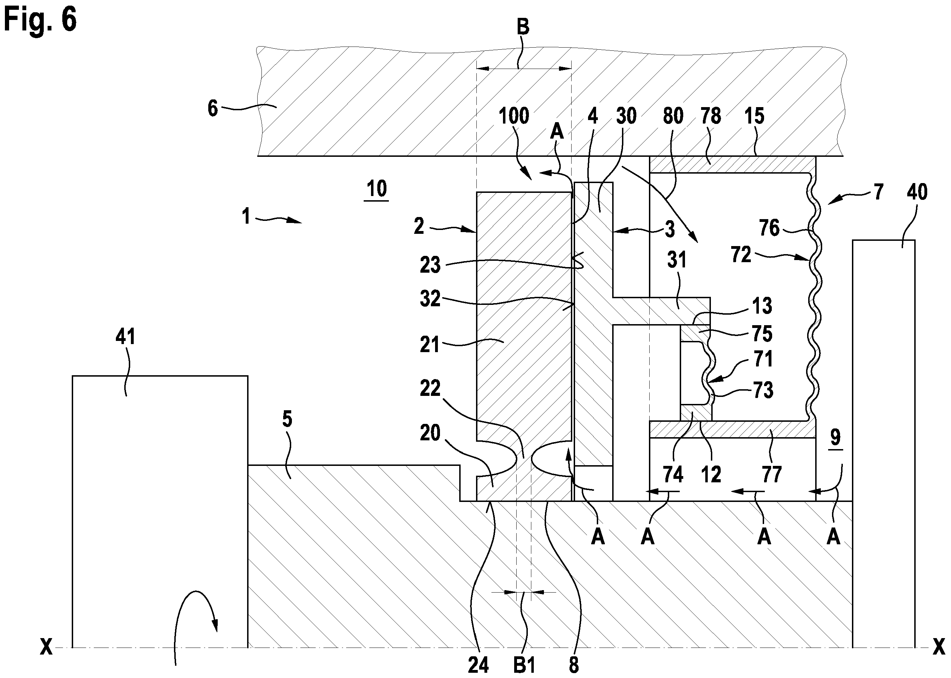

Fig. 6 zeigt eine Gleitringdichtungsanordnung 1 gemäß einem sechsten Ausführungsbeispiel der Erfindung. Das sechste Ausführungsbeispiel entspricht im Wesentlichen dem fünften Ausführungsbeispiel, wobei im Unterschied zum fünften Ausführungsbeispiel beim sechsten Ausführungsbeispiel der Axialbereich 31 an einem mittleren Bereich des Radialbereichs 30 des stationären Gleitrings 3 angeordnet ist. Genauer ist der Axialbereich 31 in der Mitte zwischen innerem und äußerem Umfang des stationären Gleitrings angeordnet. Weiterhin ist auch der erste Teilbalg 71 umgedreht, d.h., der erste Balgbereich 73 ist in Richtung zum zweiten Balgbereich 76 gerichtet und der erste innere Randbereich 74 und der erste äußere Randbereich 75 sind in Richtung zum stationären Gleitring 3 gerichtet. Durch die Anordnung des ersten Teilbalgs 71 an dem am mittleren Bereich des stationären Gleitrings 3 angeordneten Axialbereich 31 kann eine verbesserte Kräfteverteilung auf den stationären Gleitring 3 erreicht werden. Die Anordnung des Axialbereichs 31 am mittleren Bereich des stationären Gleitrings 3 ermöglicht insbesondere eine zentrale Krafteinleitung von durch das Faltenbalgelement 7 aufgebrachten Kräften.

### Bezugszeichenliste

- 1: Gleitringdichtungsanordnung
- 2: Rotierender Gleitring
- 3: Stationärer Gleitring
- 4: Dichtspalt
- 5: Rotierendes Bauteil/Welle
- 6: Gehäuse
- 7: Faltenbalg-Element
- 8: Erste Kraftschlussverbindung
- 9: Motorseite
- 10: Getriebeseite
- 12: Erster Verbindungsbereich
- 13: Zweiter Verbindungsbereich
- 14: Dritter Verbindungsbereich
- 15: Vierter Verbindungsbereich
- 16: erstes Bauteil
- 17: zweites Bauteil
- 20: Fußbereich
- 21: Gleitbereich
- 22: Entkoppeleinrichtung/Verengung
- 23: Erste Gleitfläche
- 24: Fixierfläche
- 25: elektrischer Bereich
- 30: Radialbereich
- 31: Axialbereich
- 32: Zweite Gleitfläche
- 40: Elektrischer Antrieb
- 41: Getriebe
- 71: Erster Teilbalg
- 72: Zweiter Teilbalg
- 73: Erster Balgbereich
- 74: Erster innerer Randbereich
- 75: Erster äußerer Randbereich
- 76: Zweiter Balgbereich
- 77: Zweiter innerer Randbereich
- 78: Zweiter äußerer Randbereich
- 79: Innenbereich
- 80: Strömung in den Innenbereich
- 100: Gleitringdichtung
- A: Gasleckage über Dichtspalt
- B: Breite des Gleitbereichs des rotierenden Gleitrings
- B1: Breite der Entkoppeleinrichtung
- X-X: Axialrichtung

## Patentansprüche

1. Gleitringdichtungsanordnung umfassend
- eine Gleitringdichtung (100) mit einem rotierenden Gleitring (2) und einem stationären Gleitring (3), welche zwischen sich einen Dichtspalt (4) definieren,wobei der rotierende Gleitring (2) einen Fußbereich (20), einen Gleitbereich (21) und eine Entkoppeleinrichtung (22) aufweist, und
- wobei die Entkoppeleinrichtung (22) in radialer Richtung des rotierenden Gleitrings zwischen dem Fußbereich (20) und dem Gleitbereich (21) angeordnet ist,
**gekennzeichnet durch**
- ein Faltenbalg-Element (7), welches am stationären Gleitring (3) angeordnet ist,
- wobei das Faltenbalg-Element (7) einen ersten Teilbalg (71) und einen zweiten Teilbalg (72) aufweist, wobei der erste Teilbalg (71) einen ersten Balgbereich (73), einen ersten inneren Randbereich (74) und einen ersten äußeren Randbereich (75) aufweist und wobei der zweite Teilbalg (72) einen zweiten Balgbereich (76), einen zweiten inneren Randbereich (77) und einen zweiten äußeren Randbereich (78) aufweist.

2. Gleitringdichtungsanordnung nach Anspruch 1, wobei der rotierende Gleitring mit dem Fußbereich (20), dem Gleitbereich (21) und der Entkoppeleinrichtung (22) ein einteiliges Bauteil ist.

3. Gleitringdichtungsanordnung nach Anspruch 2, wobei die Entkoppeleinrichtung (22) des rotierenden Gleitrings (2) eine Verengung zwischen dem Fußbereich (20) und dem Gleitbereich (21) ist.

4. Gleitringdichtungsanordnung nach Anspruch 3, wobei die Verengung in Axialrichtung (X-X) des rotierenden Gleitrings mittig am rotierenden Gleitring angeordnet ist.

5. Gleitringdichtungsanordnung nach Anspruch 4, wobei die Verengung durch zwei symmetrische Ausnehmungen gebildet ist.

6. Gleitringdichtungsanordnung nach Anspruch 3, wobei die Verengung asymmetrisch am rotierenden Gleitring (2) ausgebildet ist.

7. Gleitringdichtungsanordnung nach einem der Ansprüche 3 bis 6, wobei der Gleitbereich (21) eine Breite (B) aufweist und die Verengung eine Breite (B1) aufweist, welche in einem Bereich von 10 bis 80 % der Breite (B) des Gleitbereichs liegt.

8. Gleitringdichtungsanordnung nach Anspruch 1, wobei die Entkoppeleinrichtung (22) ein elastischer Bereich (25) ist, welcher zwischen dem Fußbereich (20) und dem Gleitbereich (21) des rotierenden Gleitrings angeordnet ist.

9. Gleitringdichtungsanordnung nach einem der vorhergehenden Ansprüche, wobei der Fußbereich (20) eine Fixierfläche (24) aufweist, eingerichtet zur Fixierung des rotierenden Gleitrings an einem rotierenden Bauteil, wobei die Fixierfläche eine abdichtende Kraftschlussfläche ist.

10. Gleitringdichtungsanordnung nach Anspruch 9, wobei der rotierende Gleitring eingerichtet ist, ohne Nebendichtung an einem rotierenden Bauteil fixierbar zu sein.

11. Gleitringdichtungsanordnung nach einem der vorhergehenden Ansprüche, wobei der rotierende Gleitring (2) zwischen einem ersten Bauteil (16) und einem zweiten Bauteil (17) in Axialrichtung (X-X) eingespannt ist.

12. Gleitringdichtungsanordnung nach einem der vorhergehenden Ansprüche, wobei der stationäre Gleitring (3) einen Querschnitt mit einem Radialbereich (30) und einem Axialbereich (31) aufweist, wobei der Axialbereich (31) an einem radial inneren Bereich des stationären Gleitrings (3) oder an einem radial äußeren Bereich des stationären Gleitrings (3) oder an einem mittigen Bereich des stationären Gleitrings (3) angeordnet ist.

13. Gleitringdichtungsanordnung nach Anspruch 1, wobei das Faltenbalg-Element (7) am Axialbereich (31) des stationären Gleitrings (3) angeordnet ist.

## Claims

1. Mechanical seal assembly comprising
- a mechanical seal (100) having a rotating slide ring (2) and a stationary slide ring (3) which define a sealing gap (4) therebetween, wherein the rotating slide ring (2) has a base region (20), a slide region (21) and a decoupling device (22), and
- wherein the decoupling device (22) is disposed in the radial direction of the rotating slide ring between the base region (20) and the slide region (21),
**characterised by**
- a bellows element (7) which is disposed on the stationary slide ring (3),
- wherein the bellows element (7) has a first partial bellows (71) and a second partial bellows (72), wherein the first partial bellows (71) has a first bellows region (73), a first inner edge region (74) and a first outer edge region (75) and wherein the second partial bellows (72) has a second bellows region (76), a second inner edge region (77) and a second outer edge region (78).

2. Mechanical seal assembly as claimed in claim 1, wherein the rotating slide ring, together with the base region (20), the slide region (21) and the decoupling device (22), is a one-piece component.

3. Mechanical seal assembly as claimed in claim 2, wherein the decoupling device (22) of the rotating slide ring (2) is a narrowed portion between the base region (20) and the slide region (21).

4. Mechanical seal assembly as claimed in claim 3, wherein the narrowed portion is disposed in the axial direction (X-X) of the rotating slide ring centrally on the rotating slide ring.

5. Mechanical seal assembly as claimed in claim 4, wherein the narrowed portion is formed by two symmetrical recesses.

6. Mechanical seal assembly as claimed in claim 3, wherein the narrowed portion is formed asymmetrically on the rotating slide ring (2).

7. Mechanical seal assembly as claimed in any one of claims 3 to 6, wherein the slide region (21) has a width (B) and the narrowed portion has a width (B1) which is in a range of 10 to 80% of the width (B) of the slide region.

8. Mechanical seal assembly as claimed in claim 1, wherein the decoupling device (22) is an elastic region (25) which is disposed between the base region (20) and the slide region (21) of the rotating slide ring.

9. Mechanical seal assembly as claimed in any one of the preceding claims, wherein the base region (20) has a fixing surface (24), arranged to fix the rotating slide ring to a rotating component, wherein the fixing surface is a sealing frictional contact surface.

10. Mechanical seal assembly as claimed in claim 9, wherein the rotating slide ring is arranged to be fixable to a rotating component without a secondary seal.

11. Mechanical seal assembly as claimed in any one of the preceding claims, wherein the rotating slide ring (2) is clamped in the axial direction (X-X) between a first component (16) and a second component (17).

12. Mechanical seal assembly as claimed in any one of the preceding claims, wherein the stationary slide ring (3) has a cross-section with a radial region (30) and an axial region (31), wherein the axial region (31) is disposed on a radially inner region of the stationary slide ring (3) or on a radially outer region of the stationary slide ring (3) or on a central region of the stationary slide ring (3).

13. Mechanical seal assembly as claimed in claim 1, wherein the bellows element (7) is disposed on the axial region (31) of the stationary slide ring (3).

## Revendications

1. Système de garniture étanche à anneau glissant comprenant
- une garniture étanche à anneau glissant (100) avec un anneau glissant (2) rotatif et un anneau glissant (3) stationnaire qui définissent entre eux une fente étanche (4), dans lequel l'anneau glissant (2) rotatif présente une zone de pied (20), une zone de glissement (21) et un dispositif de découplage (22), et
- dans lequel le dispositif de découplage (22) est agencé dans le sens radial de l'anneau glissant rotatif entre la zone de pied (20) et la zone de glissement (21),
**caractérisé par**
- un élément de soufflet (7) qui est agencé au niveau de l'anneau glissant (3) stationnaire,
- dans lequel l'élément de soufflet (7) présente un premier soufflet partiel (71) et un second soufflet partiel (72), dans lequel le premier soufflet partiel (71) présente une première zone de soufflet (73), une première zone de bord intérieure (74) et une première zone de bord extérieure (75) et dans lequel le second soufflet partiel (72) présente une seconde zone de soufflet (76), une seconde zone de bord intérieure (77) et une seconde zone de bord extérieure (78).

2. Système de garniture étanche à anneau glissant selon la revendication 1, dans lequel l'anneau glissant rotatif avec la zone de pied (20), la zone de glissement (21) et le dispositif de découplage (22) est un composant d'un seul tenant.

3. Système de garniture étanche à anneau glissant selon la revendication 2, dans lequel le dispositif de découplage (22) de l'anneau glissant (2) rotatif est un rétrécissement entre la zone de pied (20) et la zone de glissement (21).

4. Système de garniture étanche à anneau glissant selon la revendication 3, dans lequel le rétrécissement est agencé dans le sens axial (X-X) de l'anneau glissant rotatif au milieu de l'anneau glissant rotatif.

5. Système de garniture étanche à anneau glissant selon la revendication 4, dans lequel le rétrécissement est formé par deux évidements symétriques.

6. Système de garniture étanche à anneau glissant selon la revendication 3, dans lequel le rétrécissement est réalisé de manière asymétrique au niveau de l'anneau glissant (2) rotatif.

7. Système de garniture étanche à anneau glissant selon l'une des revendications 3 à 6, dans lequel la zone de glissement (21) présente une largeur (B) et le rétrécissement présente une largeur (B1) qui se trouve dans une zone de 10 à 80 % de la largeur (B) de la zone de glissement.

8. Système de garniture étanche à anneau glissant selon la revendication 1, dans lequel le dispositif de découplage (22) est une zone élastique (25) qui est agencée entre la zone de pied (20) et la zone de glissement (21) de l'anneau glissant rotatif.

9. Système de garniture étanche à anneau glissant selon l'une des revendications précédentes, dans lequel la zone de pied (20) présente une surface de fixation (24) aménagée pour la fixation de l'anneau glissant rotatif au niveau d'un composant rotatif, dans lequel la surface de fixation est une surface de liaison à force étanche.

10. Système de garniture étanche à anneau glissant selon la revendication 9, dans lequel l'anneau glissant rotatif est aménagé afin de pouvoir être fixé sans garniture accessoire à un composant rotatif.

11. Système de garniture étanche à anneau glissant selon l'une des revendications précédentes, dans lequel l'anneau glissant (2) rotatif est serré entre un premier composant (16) et un second composant (17) dans le sens axial (X-X).

12. Système de garniture étanche à anneau glissant selon l'une des revendications précédentes, dans lequel l'anneau glissant (3) stationnaire présente une section transversale avec une zone radiale (30) et une zone axiale (31), dans lequel la zone axiale (31) est agencée au niveau d'une zone radialement intérieure de l'anneau glissant (3) stationnaire ou au niveau d'une zone radialement extérieure de l'anneau glissant (3) stationnaire ou au niveau d'une zone médiane de l'anneau glissant (3) stationnaire.

13. Système de garniture étanche à anneau glissant selon la revendication 1, dans lequel l'élément de soufflet (7) est agencé au niveau de la zone axiale (31) de l'anneau glissant (3) stationnaire.
